(19) Europäisches Patentamt European Patent Office Office européen des brevets

(11) **EP 4 431 313 B1**

(12) **EUROPEAN PATENT SPECIFICATION**

(45) Date of publication and mention
of the grant of the patent:
**17.12.2025 Bulletin 2025/51**

(21) Application number: **24160735.7**

(22) Date of filing: **01.03.2024**

(51) International Patent Classification (IPC):
**B60C 15/024** (2006.01)

(52) Cooperative Patent Classification (CPC):
**B60C 15/024**

(54) **MOTORCYCLE TIRE**

MOTORRADREIFEN

PNEU DE MOTOCYCLETTE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **16.03.2023 JP 2023042099**

(43) Date of publication of application:
**18.09.2024 Bulletin 2024/38**

(73) Proprietor: **Sumitomo Rubber Industries, Ltd.
Kobe-shi, Hyogo 651-0072 (JP)**

(72) Inventor: **TOCHIKI, Yuki
Kobe-shi, Hyogo, 651-0072 (JP)**

(74) Representative: **Manitz Finsterwald
Patent- und Rechtsanwaltspartnerschaft mbB
Martin-Greif-Straße 1
80336 München (DE)**

(56) References cited:
**EP-B1- 1 011 993         WO-A1-2019/107202
WO-A1-2019/155787     JP-A- 2002 254 909**

**Description**

BACKGROUND OF THE INVENTION

Field of the Invention

The present invention relates to a motorcycle tire.

Background Art

A pneumatic tire for which workability of rim fitting is improved, while maintaining good resistance to rim detachment, by adjusting the ratio dw/D of an inner diameter dw of a core to a heel diameter D of a rim specified in an official standard and the ratio dt/D of a heel diameter dt of a bead portion to the heel diameter D of the rim, has been proposed (for example, Japanese Patent No. 4926314).

When importance is placed on resistance to rim detachment and workability of rim fitting as in the tire disclosed in Japanese Patent No. 4926314, the tightening force of each bead may be reduced. The tightening force of each bead influences the stiffness feeling and the ground-contact feeling of the tire. It is difficult to improve both the ground-contact feeling and the stiffness feeling.

Further state of the art tires can be found in EP 1 011 993 B1, WO 2019/107202 A1, WO 2019/155787 A1 and JP 2002 254909 A.

An object of the present invention is to provide a motorcycle tire that can have an enhanced stiffness feeling while maintaining a ground-contact feeling.

SUMMARY OF THE INVENTION

A motorcycle tire according to the present invention includes a bead portion to be fitted to a rim. The bead portion includes a core extending in a circumferential direction and a carcass ply including a large number of carcass cords aligned with each other. The carcass ply is turned up at the core. An outer surface of the bead portion includes a seat surface, a flange surface, and a heel surface. The seat surface includes a toe of the tire and comes into contact with a seat of the rim. The flange surface comes into contact with a flange of the rim. The heel surface is located between the seat surface and the flange surface. The rim is a standardized rim. In a meridian cross-section of the tire, by defining an inner bead reference line extending in a radial direction and tangent to the core from an axially inner side and an outer bead reference line extending in the radial direction and tangent to the core from an axially outer side, a thickness from a carcass to the seat surface in a state where the tire is not fitted on the rim is represented by a thickness hc along the inner bead reference line and a thickness ha along the outer bead reference line, and a thickness from the carcass to the seat in a state where the tire is fitted on the rim is represented by a thickness kc along the inner bead reference line and a thickness ka along the outer bead reference line. The thickness hc, the thickness ha, the thickness kc, and the thickness ka satisfy the following formula (1).

$$\text{Formula (1): } 0.15 \leq (ha - ka)/ha - (hc - kc)/hc \leq 0.45.$$

According to the present invention, a motorcycle tire that can have an enhanced stiffness feeling while maintaining a ground-contact feeling, is obtained.

BRIEF DESCRIPTION OF THE DRAWINGS

FIG. 1 is a cross-sectional view showing a part of a tire according to a first embodiment of the present invention;

FIG. 2 is a cross-sectional view illustrating a rim;

FIG. 3 is a cross-sectional view illustrating a contour of a bead portion; and

FIG. 4 is a cross-sectional view showing a part of the tire fitted on the rim.

DETAILED DESCRIPTION

In the present invention, unless otherwise specified, the dimensions and angles of each component of a tire are measured in a standardized state.

The standardized state means a state where the tire is fitted on a standardized rim, the internal pressure of the tire is adjusted to a standardized internal pressure, and no load is applied to the tire.

The dimensions and angles of each component in a meridian cross-section of the tire, which cannot be measured in a state where the tire is fitted on the standardized rim, are measured in a cut plane of the tire obtained by cutting the tire along a plane including a rotation axis. In this measurement, the tire is set such that the distance between right and left beads is equal to the distance between the beads in the tire that is fitted on the standardized rim. The configuration of the tire that cannot be confirmed in a state where the tire is fitted on the standardized rim is confirmed in the above-described cut plane.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are standardized internal pressures.

The standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

[Findings on Which Present Invention Is Based]

The carcass of a tire includes a carcass ply. The carcass ply is turned up at a core of each bead. The carcass ply includes a large number of carcass cords aligned with each other.

The tire is fitted onto a rim, the interior of the tire is filled, for example, with air, and then the tire is used. The tire expands by being filled with air. Accordingly, the tension of a ply body of the carcass ply, which extends between a pair of the beads, increases.

Each bead portion of the tire fitted on the rim is placed on a seat of the rim. The seat is tilted relative to the axial direction such that the toe side thereof is located radially inward of the heel side thereof.

When the tread of the tire comes into contact with a road surface and a load is applied to the tire, a force acts on each component of the tire. An axially inward force acts on the core of each bead along the direction of the tilt of the seat. Accordingly, the tension of the ply body further increases.

Focusing on a particular portion of the tread, the tread repeatedly enters and exits a ground-contact surface. When the tread enters the ground-contact surface, the force acting on the core increases. This force reaches a maximum value and then decreases. The tread exits the ground-contact surface. During the period from when the tread enters the ground-contact surface to when the tread exits the ground-contact surface, the tension of the ply body varies. As the tension of the ply body increases, the stiffness of the tire increases accordingly. The stiffness of the tire is linked to the tension of the ply body. The stiffness of the tire influences a ground-contact feeling and a stiffness feeling.

In order to improve the ground-contact feeling and the stiffness feeling of the tire, the present inventor has focused on the above-described variation of the tension of the ply body and has conducted an intensive study to control the stiffness of the tire, leading to completion of the invention described below.

[Outline of Embodiments of Present Invention]

[Configuration 1]

A tire according to an aspect of the present invention is a motorcycle tire including a bead portion to be fitted to a rim, wherein

the bead portion includes a core extending in a circumferential direction and a carcass ply including a large number of carcass cords aligned with each other,
the carcass ply is turned up at the core,
an outer surface of the bead portion includes a seat surface, a flange surface, and a heel surface,
the seat surface includes a toe of the tire and comes into contact with a seat of the rim,

the flange surface comes into contact with a flange of the rim,
the heel surface is located between the seat surface and the flange surface,
the rim is a standardized rim,
in a meridian cross-section of the tire, by defining an inner bead reference line extending in a radial direction and tangent to the core from an axially inner side and an outer bead reference line extending in the radial direction and tangent to the core from an axially outer side,
a thickness from a carcass to the seat surface in a state where the tire is not fitted on the rim is represented by a thickness hc along the inner bead reference line and a thickness ha along the outer bead reference line, and
a thickness from the carcass to the seat in a state where the tire is fitted on the rim is represented by a thickness kc along the inner bead reference line and a thickness ka along the outer bead reference line, and
the thickness hc, the thickness ha, the thickness kc, and the thickness ka satisfy the following formula (1),

$$\text{Formula (1): } 0.15 \leq (ha - ka)/ha - (hc - kc)/hc \leq 0.45.$$

By forming the tire as described above, the tire can have an enhanced stiffness feeling while maintaining a ground-contact feeling.

[Configuration 2]

From the viewpoint of being able to have an enhanced stiffness feeling while maintaining a ground-contact feeling, preferably, in the tire described in [Configuration 1] above, the thickness ha and the thickness ka satisfy the following formula (2),

$$\text{Formula (2): } 0.40 \leq (ha - ka)/ha \leq 0.85.$$

[Configuration 3]

From the same viewpoint, preferably, in the meridian cross-section of the tire described in [Configuration 1] or [Configuration 2] above, a contour of the heel surface is represented by an arc, and the arc has a radius of not less than 2.5 mm and not greater than 7.5 mm.

[Configuration 4]

From the same viewpoint, preferably, in the tire described in any one of [Configuration 1] to [Configuration 3] above, a ratio (W2/W1) of a distance W2 in an axial direction from the outer bead reference line to the inner bead reference line, to a distance W1 in the axial direction from a flange reference line extending radially inward from a radially inner end of the flange surface to the toe of the tire, is not less than 0.4 and not greater than 0.7.

[Details of Embodiments of Present Invention]

Hereinafter, the present invention will be described in detail based on preferred embodiments with appropriate reference to the drawings.

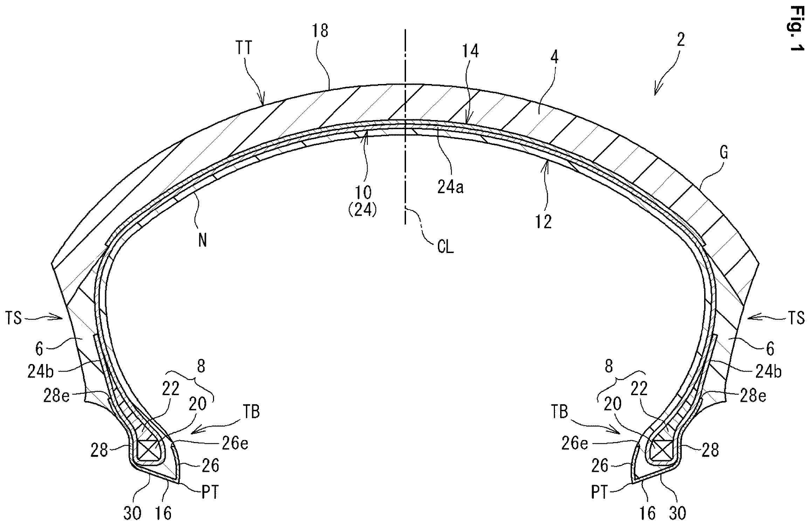

FIG. 1 shows a part of a tire 2 according to an embodiment of the present invention. The tire 2 is a motorcycle tire. The tire 2 is a rear tire which is attached to the rear wheel of a motorcycle.
FIG. 1 shows a part of a cross-section (hereinafter, referred to as a meridian cross-section) of the tire 2 along a plane including the rotation axis of the tire 2. In FIG. 1, the right-left direction is the axial direction of the tire 2, and the up-down direction is the radial direction of the tire 2. The direction perpendicular to the surface of the drawing sheet of FIG. 1 is the circumferential direction of the tire 2. An alternate long and short dash line CL represents the equator plane of the tire 2.
The tire 2 includes a tread 4, a pair of sidewalls 6, a pair of beads 8, a carcass 10, an inner liner 12, a reinforcing layer 14, and chafers 16 as components thereof.
The tread 4 includes a tread surface 18 which comes into contact with a road surface. The tread surface 18 forms a part of an outer surface G of the tire 2. Each sidewall 6 is connected to the tread 4. Each bead 8 is located radially inward of the sidewall 6. The carcass 10 extends on and between the pair of beads 8. The inner liner 12 is located inward of the carcass 10. The inner liner 12 forms an inner surface N of the tire 2. The reinforcing layer 14 is stacked on the carcass 10 on the radially inner side of the tread 4. Each chafer 16 is located radially inward of the bead 8.
Each bead 8 includes a core 20 and an apex 22. The core 20 extends in the circumferential direction. The core 20 includes a metal wire which is not shown. In the tire 2, a cross-sectional shape of the core 20 is a rectangular shape. The cross-sectional shape may be a circular shape or a hexagonal shape. The apex 22 is located radially outward of the core 20. The apex 22 is formed from a hard crosslinked rubber. The apex 22 is tapered radially outward.

The carcass 10 includes a carcass ply 24. The carcass ply 24 is turned up at each core 20.

The carcass ply 24 includes a ply body 24a and a pair of turned-up portions 24b. The ply body 24a extends between a first bead 8 and a second bead 8 which are the pair of beads 8. The respective turned-up portions 24b are connected to the ply body 24a and turned up from the inner side toward the outer side in the axial direction at the respective cores 20.

The carcass ply 24 includes a large number of carcass cords aligned with each other, which are not shown. These carcass cords are covered with a topping rubber.

A cord formed from an organic fiber is used as each carcass cord. Examples of the organic fiber include nylon fibers, rayon fibers, polyester fibers, and aramid fibers.

The reinforcing layer 14 includes a helically wound band cord. The reinforcing layer 14 is also referred to as band. The reinforcing layer 14 may be a belt including a large number of belt cords aligned with each other.

Each chafer 16 includes an inner portion 26, an outer portion 28, and a bottom portion 30 located between the inner portion 26 and the outer portion 28. The inner portion 26 forms a part of the inner surface N of the tire 2. The outer portion 28 forms a part of the outer surface G of the tire 2. An outer end 28e of the outer portion 28 is located between the sidewall 6 and the carcass 10, and is located radially outward of an outer end 26e of the inner portion 26. The bottom portion 30 forms a part of the outer surface G of the tire 2. The bottom portion 30 extends between the inner portion 26 and the outer portion 28.

In the tire 2, each outer portion 28 comes into contact with a flange F of a rim R described later. Each bottom portion 30 comes into contact with a seat S of the rim R. Each chafer 16 forms a seat surface 32, a flange surface 34, and a heel surface 36 described later.

The chafer 16 is formed from a canvas. In other words, the chafer 16 includes a fabric. Specifically, the chafer 16 includes a fabric and a rubber with which the fabric is impregnated. An example of the material of the fabric is nylon. The chafer 16 may be composed of a sheet formed from a crosslinked rubber.

In FIG. 1, each position indicated by reference character PT is a toe of the tire 2. The toe PT is a boundary between the outer surface G and the inner surface N of the tire 2.

Although not described in detail, the tire 2 is obtained by pressurizing and heating an uncrosslinked tire 2 in a cavity formed between a mold and a bladder (or rigid core).

The outer surface G of the tire 2 is shaped by the mold (not shown). The inner surface N of the tire 2 is shaped by the bladder.

The tire 2 includes a tread portion TT, a pair of bead portions TB, and a pair of sidewall portions TS as portions thereof. The tread portion TT is a portion of the tire 2 that comes into contact with a road surface, and includes, for example, the tread 4, the reinforcing layer 14, and the inner liner 12. Each bead portion TB is a portion of the tire 2 that is fitted to a rim R described later, and includes, for example, the bead 8, the carcass 10, the chafer 16, and the inner liner 12. Each sidewall portion TS is a portion of the tire 2 that extends between the tread portion TT and the bead portion TB, and includes, for example, the sidewall 6, the carcass 10, and the inner liner 12. In the present invention, a side portion is a portion composed of the sidewall portion TS and the bead portion TB.

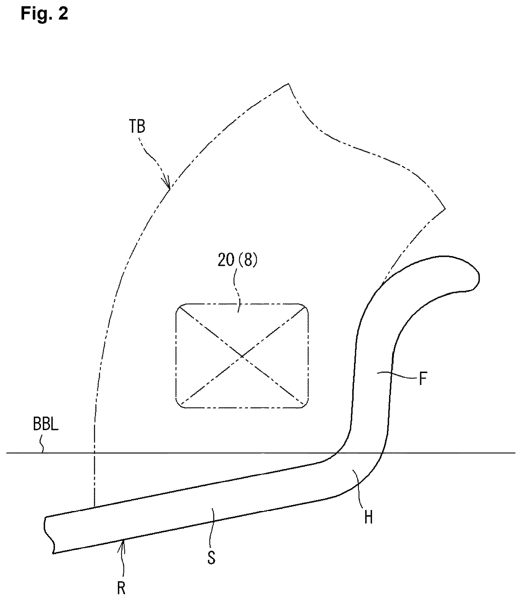

FIG. 2 shows a part of the rim R. As described above, each bead portion TB is fitted to the rim R. The rim R is a standardized rim. The interior of the tire 2 is filled, for example, with air. Accordingly, the internal pressure of the tire 2 is adjusted.

The tire 2 is fitted on the rim R. The tire 2 fitted on the rim R is also referred to as tire-rim assembly. The tire-rim assembly includes the rim R and the tire 2 fitted on the rim R.

The rim R includes the seats S and the flanges F. Each seat S supports the bead portion TB from the radially inner side. Each flange F supports the bead portion TB from the axially outer side. A boundary portion between the seat S and the flange F is also referred to as heel H. In FIG. 2, a solid line BBL extending in the axial direction is a bead base line. The bead base line BBL is a line that defines the rim diameter of (see JATMA or the like) of the rim R.

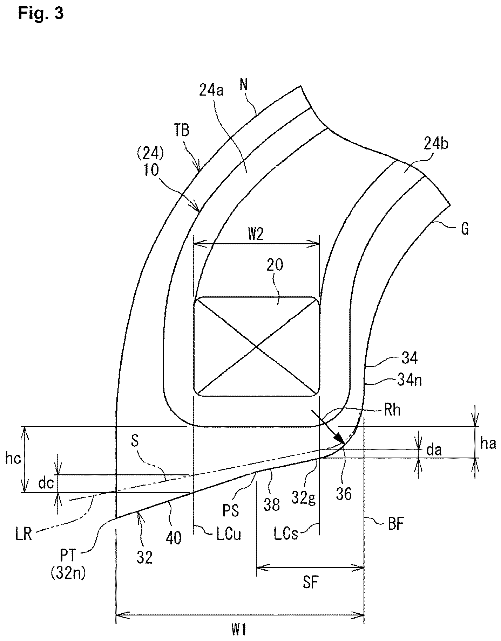

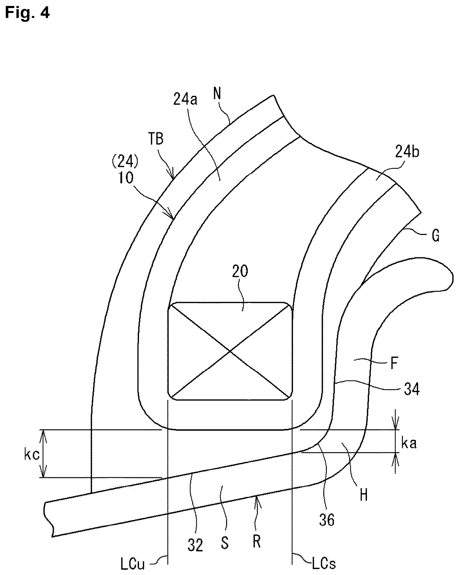

FIG. 3 shows a part of the tire 2 shown in FIG. 1. FIG. 3 shows a cross-section of the bead portion TB. FIG. 4 shows the cross-section of the bead portion TB together with the rim R. FIG. 4 shows a state where the tire 2 shown in FIG. 1 is fitted on the rim R.

The configuration regarding the bead portion TB described below is also applied to the outer surface of each bead portion of a front tire (not shown) which is attached to the front wheel of a motorcycle.

In FIG. 3, the contour of the rim R in FIG. 4 is represented by an alternate long and two short dashes line LR such that the position of the rim R when the tire 2 is fitted on the rim R can be recognized. As is obvious from the position of the contour line LR of the rim R in FIG. 3, when the tire 2 is fitted on the rim R, a portion of the tire 2 that is in contact with the rim R is compressed.

The bead portion TB includes the core 20 and the carcass ply 24. In the tire 2, the core 20 forms a ring. As described above, the carcass ply 24 is turned up at the core 20.

The outer surface of the bead portion TB forms a part of the outer surface G of the tire 2. The outer surface of the bead portion TB includes the seat surface 32, the flange surface 34, and the heel surface 36.

The seat surface 32 comes into contact with the seat S of the rim R. An axially inner end 32n of the seat surface 32 is the toe PT of the tire 2. The seat surface 32 includes the toe PT of the tire 2. An axially outer end 32g of the seat surface 32 is the boundary between the heel surface 36 and the seat surface 32.

The flange surface 34 comes into contact with the flange F of the rim R. A radially inner end 34n of the flange surface 34 is the boundary between the heel surface 36 and the flange surface 34.

In FIG. 3, a solid line indicated by reference character BF is a flange reference line that extends radially inward from the radially inner end 34n of the flange surface 34. The flange reference line BF is tangent to a contour line of the flange surface 34 at the radially inner end 34n. The contour line of the flange surface 34 which is tangent to the flange reference line BF is a straight line or an arc.

The heel surface 36 is located between the seat surface 32 and the flange surface 34. A contour line of the heel surface 36 is tangent to a contour line of the seat surface 32 (specifically, a first seat surface 38 described later) at the axially outer end 32g of the seat surface 32. The contour line of the heel surface 36 is tangent to the contour line of the flange surface 34 at the radially inner end 34n of the flange surface 34.

The contour of the heel surface 36 is represented by an arc. In other words, the contour line of the heel surface 36 is an arc. In FIG. 3, an arrow indicated by reference character Rh represents the radius of the arc representing the contour of the heel surface 36.

In FIG. 3, a position indicated by reference character PS is a position on the seat surface 32. In the tire 2, the position PS on the seat surface 32 is also referred to as seat reference point.

The seat reference point PS is located radially inward of the core 20. The above-described toe PT is located radially inward of the seat reference point PS.

A length indicated by a double-headed arrow SF is the distance in the axial direction from the flange reference line BF to the seat reference point PS. In the present invention, the distance SF in the axial direction is 7 mm. The position, on the seat surface 32, to which the distance SF in the axial direction from the flange reference line BF is 7 mm is the seat reference point PS.

The seat surface 32 of the tire 2 includes two surfaces that are the first seat surface 38 and a second seat surface 40. In FIG. 3, the contours of the first seat surface 38 and the second seat surface 40 are represented by straight lines.

The first seat surface 38 extends between the axially outer end 32g of the seat surface 32 and the seat reference point PS. The second seat surface 40 extends between the seat reference point PS and the toe PT. The seat reference point PS is the boundary between the first seat surface 38 and the second seat surface 40.

In FIG. 3, a solid line indicated by reference character LCu is an inner bead reference line. The inner bead reference line LCu extends in the radial direction. The inner bead reference line LCu is tangent to the core 20 from the axially inner side. The inner bead reference line LCu is a straight line that passes through the axially inner end of the core 20 and that extends in the radial direction.

In FIG. 3, a solid line indicated by reference character LCs is an outer bead reference line. The outer bead reference line LCs extends in the radial direction. The outer bead reference line LCs is tangent to the core 20 from the axially outer side. The outer bead reference line LCs is a straight line that passes through the axially outer end of the core 20 and that extends in the radial direction.

In FIG. 3, a length indicated by a double-headed arrow hc is the thickness from the carcass 10 to the seat surface 32 along the inner bead reference line LCu. A length indicated by a double-headed arrow ha is the thickness from the carcass 10 to the seat surface 32 along the outer bead reference line LCs.

The tire 2 shown in FIG. 3 is not fitted on the rim R. The thickness hc and the thickness ha are thicknesses from the carcass 10 to the seat surface 32 in a state where the tire 2 is not fitted on the rim R.

In the tire 2, in the meridian cross-section of the tire 2, by defining the inner bead reference line LCu and the outer bead reference line LCs, the thickness from the carcass 10 to the seat surface 32 in a state where the tire 2 is not fitted on the rim R is represented by the thickness hc along the inner bead reference line LCu and the thickness ha along the outer bead reference line LCs.

As described above, the carcass ply 24 included in the carcass 10 includes carcass cords, and the carcass cords are covered with a topping rubber.

In the present invention, the thickness hc and the thickness ha are represented by the thickness from the boundary, between the carcass cords and the topping rubber, which is located on the innermost side in the radial direction to the seat surface 32. The thickness hc and the thickness ha each include the thickness of the topping rubber.

As described above, each chafer 16 forms the seat surface 32, the flange surface 34, and the heel surface 36. The thickness hc and the thickness ha each also include the thickness of the chafer 16.

In FIG. 4, a length indicated by a double-headed arrow kc is the thickness from the carcass 10 to the seat S along the inner bead reference line LCu. A length indicated by a double-headed arrow ka is the thickness from the carcass 10 to the seat S along the outer bead reference line LCs.

The tire 2 shown in FIG. 4 is fitted on the rim R. The thickness kc and the thickness ka are thicknesses from the carcass 10 to the seat S in a state where the tire 2 is fitted on the rim R.

In the tire 2, in the meridian cross-section of the tire 2, by defining the inner bead reference line LCu and the outer bead reference line LCs, the thickness from the carcass 10 to the seat S in a state where the tire 2 is fitted on the rim R is represented by the thickness kc along the inner bead reference line LCu and the thickness ka along the outer bead reference line LCs.

The thickness kc and the thickness ka are represented by the thickness from the boundary, between the carcass cords and the topping rubber, which is located on the innermost side in the radial direction to the seat S. The thickness kc and the thickness ka each also include the thickness of the topping rubber of the carcass ply 24 and the thickness of the chafer 16.

Since the seat surface 32 comes into contact with the seat S, the thickness kc and the thickness ka are also thicknesses from the carcass 10 to the seat surface 32 in a state where the tire 2 is fitted on the rim R.

As described above, in FIG. 3, the alternate long and two short dashes line LR represents the contour of the rim R in FIG. 4. In FIG. 3, the alternate long and two short dashes line LR virtually represents the contour of the rim R in a state where the tire 2 is fitted on the rim R. The alternate long and two short dashes line LR is a virtual contour line of the seat S of the rim R on which the bead portion TB is placed.

In FIG. 3, a length indicated by a double-headed arrow dc is the thickness from the carcass 10 to the virtual contour line LR along the inner bead reference line LCu. A length indicated by a double-headed arrow da is the thickness from the carcass 10 to the virtual contour line LR along the outer bead reference line LCs.

As described above, when the tire 2 is fitted on the rim R, the portion of the tire 2 that is in contact with the rim R is compressed. The thickness dc and the thickness da correspond to thicknesses of a rubber component that is located between the carcass 10 and the seat surface 32 and that is compressed when the tire 2 is fitted on the rim R.

The difference (hc - kc) between the thickness hc and the thickness kc described above is the thickness dc, and the difference (ha - ka) between the thickness ha and the thickness ka is the thickness da.

In the tire 2, the thickness hc, the thickness ha, the thickness kc, and the thickness ka satisfy the following formula (1).

$$\text{Formula (1): } 0.15 \leq (ha - ka)/ha - (hc - kc)/hc \leq 0.45$$

The ratio (dc/hc) of the difference (hc - kc), that is, the thickness dc, to the thickness hc corresponds to the compression ratio of the rubber component on the toe side. The ratio (da/ha) of the difference (ha - ka), that is, the thickness da, to the thickness ha corresponds to the compression ratio of the rubber component on the heel side.

As described above, when the tread 4 of the tire 2 comes into contact with a road surface and a load is applied to the tire 2, an axially inward force (hereinafter, referred to as axial oblique inward force) acts on the core 20 of each bead 8 along the direction of tilt of the seat S.

When the thickness hc, the thickness ha, the thickness kc, and the thickness ka satisfy the formula (1), regarding the contact pressure of the bead portion TB with the seat S, the tire 2 can effectively make the contact pressure on the toe side lower than that on the heel side.

The force acting on the core 20 due to the load applied to the tire 2 promotes the core 20 to move obliquely in the axially inward direction. The tension generated in the carcass 10 (specifically, the ply body 24a of the carcass ply 24) is increased.

The tread 4 of the tire 2 repeatedly enters and exits a ground-contact surface. The force acting on the core 20 increases when the tread 4 enters the ground-contact surface, and eventually reaches a maximum value. In other words, the force acting on the core 20 is small at the point when the tread 4 enters the ground-contact surface, and this force gradually increases.

The force acting on the core 20 is linked to the tension of the carcass 10, and the tension of the carcass 10 is linked to the stiffness of the tire 2.

At the point when the tread 4 enters the ground-contact surface, since the force acting on the core 20 is small, an increase in the stiffness of the tire 2 due to the tension of the carcass 10 is suppressed. Since the tire 2 has a certain bending amount, a ground-contact feeling can be ensured. Subsequently, the force acting on the core 20 increases, so that the tension of the carcass 10 increases. The stiffness of the tire 2 increases, so that the tire 2 can have an enhanced stiffness feeling.

If (ha - ka)/ha is smaller than (hc - kc)/hc in the above-described formula (1), the movement of the core 20 when a load is applied to the tire 2 is suppressed, so that the tension of the carcass 10 cannot be increased. The stiffness of the tire 2 cannot be controlled using the variation of the tension of the carcass 10. The tire 2 cannot have an enhanced stiffness feeling.

If the difference between (ha - ka)/ha and (hc - kc)/hc is less than 0.15 in the above-described formula (1), the variation range of the tension of the carcass 10 is small, so that the tension of the carcass 10 cannot be sufficiently increased. In this case as well, the tire 2 cannot have an enhanced stiffness feeling. There is a concern that the fitting pressure of the tire 2 may increase and the rim fittability of the tire 2 may be impaired.

Since the difference between (ha - ka)/ha and (hc - kc)/hc is not less than 0.15, the tire 2 can have an enhanced stiffness feeling. Since an increase in the fitting pressure of the tire 2 is suppressed, the tire 2 can maintain good rim fittability. From this viewpoint, the difference between (ha - ka)/ha and (hc - kc)/hc is preferably not less than 0.30.

If the difference between (ha - ka)/ha and (hc - kc)/hc exceeds 0.45 in the above-described formula (1), the core 20 easily moves when a load is applied to the tire 2. The tension of the carcass 10 increases rapidly, so that the tire 2 cannot ensure a ground-contact feeling.

Since the difference between (ha - ka)/ha and (hc - kc)/hc is not greater than 0.45, the tire 2 can ensure a ground-contact feeling.

Since the thickness hc, the thickness ha, the thickness kc, and the thickness ka satisfy the above-described formula (1), the tire 2 can have an enhanced stiffness feeling while ensuring a ground-contact feeling.

In the tire 2, the thickness ha and the thickness ka preferably satisfy the following formula (2).

$$\text{Formula (2): } 0.40 \leq (\text{ha - ka})/\text{ha} \leq 0.85$$

Accordingly, the tire 2 can effectively increase the difference between the contact pressure on the heel side and the contact pressure on the toe side while effectively increasing the contact pressure on the heel side. The tire 2 can increase the variation range of the tension of the carcass 10, and can sufficiently increase the tension of the carcass 10. The tire 2 can effectively improve both the ground-contact feeling and the stiffness feeling.

If the ratio (ha - ka)/ha is less than 0.40, while the fitting pressure of the tire 2 decreases, the movement of the core 20 when a load is applied to the tire 2 is suppressed. The tension of the carcass 10 cannot be sufficiently increased. It is difficult to improve the stiffness feeling of the tire 2.

When the ratio (ha - ka)/ha is set to be not less than 0.40, the tire 2 can sufficiently increase the tension of the carcass 10 and can improve the stiffness feeling. From this viewpoint, the ratio (ha - ka)/ha is more preferably not less than 0.45.

If the ratio (ha - ka)/ha exceeds 0.85, the core 20 easily moves when a load is applied to the tire 2. The tension of the carcass 10 increases rapidly, so that it is difficult to improve the ground-contact feeling of the tire 2. The rim fittability may also be impaired.

In the tire 2, when the ratio (ha - ka)/ha is set to be not greater than 0.85, a rapid increase in the tension of the carcass 10 is suppressed, so that the tire 2 can improve the ground-contact feeling. From this viewpoint, the ratio (ha - ka)/ha is more preferably not greater than 0.60.

As described above, the contour of the heel surface 36 is represented by an arc in the meridian cross-section of the tire 2. The radius Rh of the arc is preferably not less than 2.5 mm and not greater than 7.5 mm.

When the radius Rh is set to be not less than 2.5 mm, a local increase in the contact pressure on the heel side is suppressed. The difference between the contact pressure on the heel side and the contact pressure on the toe side is appropriately maintained. A rapid increase in the tension of the carcass 10 is suppressed. The tire 2 can improve the ground-contact feeling. The tire 2 can also suppress an increase in the fitting pressure. The tire 2 can also maintain good rim fittability.

When the radius Rh is set to be not greater than 7.5 mm, the contact pressure on the heel side is appropriately maintained. The tire 2 can effectively increase the stiffness feeling. From this viewpoint, the radius Rh is more preferably not greater than 6.5 mm.

In FIG. 3, a length indicated by a double-headed arrow W1 is the distance in the axial direction from the flange reference line BF to the toe PT. A length indicated by a double-headed arrow W2 is the distance in the axial direction from the outer bead reference line LCs to the inner bead reference line LCu.

In the tire 2, the ratio (W2/W1) of the distance W2 in the axial direction to the distance W1 in the axial direction is preferably not less than 0.4 and not greater than 0.7.

When the ratio (W2/W1) is set to be not less than 0.4, a local increase in the contact pressure on the heel side is suppressed. The difference between the contact pressure on the heel side and the contact pressure on the toe side is appropriately maintained. A rapid increase in the tension of the carcass 10 is suppressed. The tire 2 can improve the ground-contact feeling. From this viewpoint, the ratio (W2/W1) is more preferably not less than 0.5.

When the ratio (W2/W1) is set to be not greater than 0.7, dispersion of the contact pressure is suppressed. In this case as well, the difference between the contact pressure on the heel side and the contact pressure on the toe side is appropriately maintained. Since the movement of the core 20 when a load is applied to the tire 2 is promoted, the tension of the carcass 10 can be effectively increased. The stiffness of the tire 2 can be effectively controlled using the variation of the tension of the carcass 10. The tire 2 can improve the stiffness feeling. From this viewpoint, the ratio (W2/W1) is more preferably not greater than 0.6.

In the tire 2, the distance H in the axial direction from the flange reference line BF to the toe PT is preferably not less than 10.0 mm and not greater than 13.5 mm.

When the distance H in the axial direction is set to be not less than 10.0 mm, the adhesiveness with the rim R is improved. The stiffness feeling of the tire 2 is further improved. From this viewpoint, the distance H in the axial direction is more preferably not less than 10.5 mm.

When the distance H in the axial direction is set to be not greater than 13.5 mm, an increase in the fitting pressure is effectively suppressed, and good rim fittability is obtained. From this viewpoint, the distance H in the axial direction is more preferably not greater than 12.0 mm.

As described above, according to the present invention, a motorcycle tire that can enhance a stiffness feeling while suppressing deterioration of a ground-contact feeling, is obtained.

EXAMPLES

Hereinafter, the present invention as defined by the claims will be described in further detail by means of examples, etc., but the present invention is not limited to these examples.

Motorcycle rear tires (tire designation = 200/60R17) having the basic structure shown in FIG. 1 were produced as test tires on the basis of specifications shown in Tables 1 and 2 below. The specifications of Comparative Example 1 correspond to the specifications of a conventional tire.

A commercially available tire (tire designation = 120/70R17) was used as a front tire, and performance evaluation for ground-contact feeling and stiffness feeling was made for each test tire.

[Performance Evaluation]

Each test tire was fitted onto a standardized rim and inflated with air to adjust the internal pressure of the tire to 290 kPa. This tire was attached to the rear wheel of a motorcycle equipped with a four-cycle engine having an engine displacement of 1000 cc. The internal pressure of the front tire was adjusted to 250 kPa.

This motorcycle was driven on a circuit course having an asphalt road surface, and performance evaluation for ground-contact feeling and stiffness feeling was made by the rider. The results are shown as indexes in Tables 1 and 2 below with the result of Comparative Example 1 being regarded as 10. A higher value indicates a better result. In this evaluation, if the index is 7 or higher, it is acceptable as it is determined that deterioration of a ground-contact feeling or stiffness feeling is small and suppressed.

[Overall Evaluation]

The total of the indexes obtained in the respective evaluations was calculated. The results are shown in the cells for "Total score" in Tables 1 and 2 below. A higher value indicates a better result.

[Table 1]

|  | Comp. Ex. 1 | Comp. Ex. 2 | Ex. 1 | Ex. 2 | Ex. 3 | Ex. 4 |
|---|---|---|---|---|---|---|
| da/ha [-] | 0.35 | 0.50 | 0.45 | 0.50 | 0.50 | 0.60 |
| dc/hc [-] | 0.25 | 0.60 | 0.30 | 0.20 | 0.05 | 0.30 |
| da/ha - dc/hc | 0.10 | -0.10 | 0.15 | 0.30 | 0.45 | 0.30 |
| Rh [mm] | 2.5 | 2.5 | 2.5 | 2.5 | 2.5 | 2.5 |
| W1/W2 [-] | 0.55 | 0.55 | 0.55 | 0.55 | 0.55 | 0.55 |
| Stiffness feeling | 10 | 5 | 14 | 15 | 15 | 15 |
| Ground-contact feeling | 10 | 17 | 19 | 19 | 18 | 19 |
| Total score | 20 | 22 | 33 | 34 | 33 | 34 |

[Table 2]

|  | Ex. 5 | Ex. 6 | Ex. 7 | Ex. 8 | Ex. 9 |
|---|---|---|---|---|---|
| da/ha [-] | 0.90 | 0.60 | 0.60 | 0.60 | 0.60 |
| dc/hc [-] | 0.60 | 0.30 | 0.30 | 0.30 | 0.30 |
| da/ha - dc/hc | 0.30 | 0.30 | 0.30 | 0.30 | 0.30 |

(continued)

|  | Ex. 5 | Ex. 6 | Ex. 7 | Ex. 8 | Ex. 9 |
|---|---|---|---|---|---|
| Rh [mm] | 2.5 | 1.0 | 10.0 | 2.5 | 2.5 |
| W1/W2 [-] | 0.55 | 0.55 | 0.55 | 0.35 | 0.80 |
| Stiffness feeling | 16 | 17 | 8 | 17 | 12 |
| Ground-contact feeling | 15 | 13 | 19 | 11 | 19 |
| Total score | 31 | 30 | 27 | 28 | 31 |

As shown in Tables 1 and 2, it is confirmed that, in each Example, a ground-contact feeling and a stiffness feeling are improved. From the evaluation results, advantages of the present invention are clear.

The above-described technology enhancing a stiffness feeling while ensuring a ground-contact feeling can also be applied to various motorcycle tires.

**Claims**

1. A motorcycle tire (2) comprising a bead portion (TB) to be fitted to a rim (R), wherein

   the bead portion (TB) includes a core (20) extending in a circumferential direction and a carcass ply (24) including a large number of carcass cords aligned with each other,
   the carcass ply (24) is turned up at the core (20),
   an outer surface of the bead portion (TB) includes a seat surface (32), a flange surface (34), and a heel surface (36),
   the seat surface (32) includes a toe (PT) of the tire (2) and comes into contact with a seat (S) of the rim (R),
   the flange surface (34) comes into contact with a flange (F) of the rim (R),
   the heel surface (36) is located between the seat surface (32) and the flange surface (34),
   the rim (R) is a standardized rim,
   in a meridian cross-section of the tire (2), by defining an inner bead reference line (LCu) extending in a radial direction and tangent to the core (20) from an axially inner side and an outer bead reference line (LCs) extending in the radial direction and tangent to the core (20) from an axially outer side,
   **characterized in that**
   a thickness from a carcass (10) to the seat surface (32) in a state where the tire (2) is not fitted on the rim (R) is represented by a thickness hc along the inner bead reference line (LCu) and a thickness ha along the outer bead reference line (LCs), and
   a thickness from the carcass (10) to the seat (S) in a state where the tire (2) is fitted on the rim (R) is represented by a thickness kc along the inner bead reference line (LCu) and a thickness ka along the outer bead reference line (LCs), and
   the thickness hc, the thickness ha, the thickness kc, and the thickness ka satisfy the following formula (1),

   $$\text{Formula (1): } 0.15 \leq (ha - ka)/ha - (hc - kc)/hc \leq 0.45.$$

2. The motorcycle tire (2) according to claim 1, wherein the thickness ha and the thickness ka satisfy the following formula (2),

   $$\text{Formula (2): } 0.40 \leq (ha - ka)/ha \leq 0.85.$$

3. The motorcycle tire (2) according to claim 1 or 2, wherein

   a contour of the heel surface (36) is represented by an arc in the meridian cross-section of the tire (2), and
   the arc has a radius (Rh) of not less than 2.5 mm and not greater than 7.5 mm.

4. The motorcycle tire (2) according to any one of claims 1 to 3, wherein a ratio (W2/W1) of a distance W2 in an axial direction from the outer bead reference line (LCs) to the inner bead reference line (LCu), to a distance W1 in the axial direction from a flange reference line (BF) extending radially inward from a radially inner end (34n) of the flange surface (34) to the toe (PT) of the tire (2), is not less than 0.4 and not greater than 0.7.

**Patentansprüche**

1.  Motorradreifen (2) mit einem Wulstabschnitt (TB), der auf eine Felge (R) aufzuziehen ist, wobei

    der Wulstabschnitt (TB) einen Kern (20), der sich in einer Umfangsrichtung erstreckt, und eine Karkasslage (24) umfasst, die eine große Anzahl von Karkasskorden umfasst, die miteinander ausgerichtet sind,
    die Karkasslage (24) an dem Kern (20) umgeschlagen ist,
    eine Außenfläche des Wulstabschnitts (TB) eine Sitzfläche (32), eine Felgenhornfläche (34) und eine Fersenfläche (36) aufweist,
    die Sitzfläche (32) eine Zehe (PT) des Reifens (2) umfasst und mit einem Sitz (S) der Felge (R) in Kontakt kommt,
    die Felgenhornfläche (34) mit einem Felgenhorn (F) der Felge (R) in Kontakt kommt,
    die Fersenfläche (36) zwischen der Sitzfläche (32) und der Felgenhornfläche (34) angeordnet ist,
    die Felge (R) eine standardisierte Felge ist,
    in einem Meridianquerschnitt des Reifens (2) durch Definieren einer inneren Wulstreferenzlinie (LCu), die sich in einer radialen Richtung und tangential zu dem Kern (20) von einer axial inneren Seite erstreckt, und einer äußeren Wulstreferenzlinie (LCs), die sich in der radialen Richtung und tangential zu dem Kern (20) von einer axial äußeren Seite erstreckt, **dadurch gekennzeichnet, dass**
    eine Dicke von einer Karkasse (10) zu der Sitzfläche (32) in einem Zustand, in dem der Reifen (2) nicht auf die Felge (R) aufgezogen ist, durch eine Dicke hc entlang der inneren Wulstreferenzlinie (LCu) und eine Dicke ha entlang der äußeren Wulstreferenzlinie (LCs) dargestellt ist, und
    eine Dicke von der Karkasse (10) zu dem Sitz (S) in einem Zustand, in dem der Reifen (2) auf die Felge (R) aufgezogen ist, durch eine Dicke kc entlang der inneren Wulstreferenzlinie (LCu) und eine Dicke ka entlang der äußeren Wulstreferenzlinie (LCs) dargestellt ist, und
    die Dicke hc, die Dicke ha, die Dicke kc und die Dicke ka die folgende Formel (1) erfüllen,

    $$\text{Formel (1): } 0{,}15 \le (ha - ka)/ha - (hc - kc)/hc \le 0{,}45.$$

2.  Motorradreifen (2) nach Anspruch 1, wobei die Dicke ha und die Dicke ka die folgende Formel (2) erfüllen,

    $$\text{Formel (2): } 0{,}40 \le (ha - ka)/ha \le 0{,}85.$$

3.  Motorradreifen (2) nach Anspruch 1 oder 2, wobei

    eine Kontur der Fersenfläche (36) durch einen Bogen in dem Meridianquerschnitt des Reifens (2) dargestellt ist, und
    der Bogen einen Radius (Rh) von nicht weniger als 2,5 mm und nicht mehr als 7,5 mm aufweist.

4.  Motorradreifen (2) nach einem der Ansprüche 1 bis 3, wobei ein Verhältnis (W2/W1) eines Abstands W2 in einer axialen Richtung von der äußeren Wulstreferenzlinie (LCs) zu der inneren Wulstreferenzlinie (LCu) zu einem Abstand W1 in der axialen Richtung von einer Felgenhornreferenzlinie (BF), die sich von einem radial inneren Ende (34n) der Felgenhornfläche (34) zu der Zehe (PT) des Reifens (2) radial nach innen erstreckt, nicht weniger als 0,4 und nicht mehr als 0,7 beträgt.

**Revendications**

1.  Pneu de motocyclette (2) comprenant une partie de talon (TB) à installer sur une jante (R), dans lequel

    la partie de talon (TB) comporte un noyau (20) s'étendant dans une direction circonférentielle et un pli de carcasse (24) comportant un grand nombre de câblés de carcasse aligné les uns avec les autres,
    le pli de carcasse (24) est tourné vers le haut au niveau du noyau (20), une surface extérieure de la partie de talon (TB) comporte une surface de logement (32), une surface de bride (34), et une surface de talon (36),
    la surface de logement (32) comporte un orteil (PT) du pneu (2) et entre en contact avec un logement (S) de la jante (R),

la surface de bride (34) entre en contact avec une bride (F) de la jante (R), la surface de talon (36) est située entre la surface de logement (32) et la surface de bride (34),

la jante (R) est une jante standardisée,

dans une coupe transversale méridienne du pneu (2), en définissant une ligne de référence de talon interne (LCu) s'étendant dans une direction radiale et tangente au noyau (20) depuis un côté axialement interne et une ligne de référence de talon externe (LCs) s'étendant dans la direction radiale et tangente au noyau (20) depuis un côté axialement extérieur, **caractérisé en ce que**

une épaisseur d'une carcasse (10) à la surface de logement (32) dans un état où le pneu (2) n'est pas monté sur la jante (R) est représentée par une épaissseur he le long de la ligne de référence de talon interne (LCu) et une épaissseur ha le long de la ligne de référence de talon externe (LCs), et une épaisseur de la carcasse (10) au logement (S) dans un état où le pneu (2) est monté sur la jante (R) est représentée par une épaissseur kc le long de la ligne de référence de talon interne (LCu) et une épaissseur ka le long de la ligne de référence de talon externe (LCs), et

l'épaissseur he, l'épaissseur ha, l'épaissseur kc, et l'épaissseur ka satisfont la formule (1) suivante,

$$\text{Formule (1) : } 0,15 \le (ha - ka)/ha - (he - kc)/hc \le 0,45.$$

2.  Pneu de motocyclette (2) selon la revendication 1, dans lequel l'épaissseur ha et l'épaissseur ka satisfont la formule (2) suivante,

$$\text{Formule (2) : } 0,40 \le (ha - ka)/ha \le 0,85.$$

3.  Pneu de motocyclette (2) selon la revendication 1 ou 2, dans lequel un contour de la surface du talon (36) est représenté par un arc dans la coupe transversale méridienne du pneu (2), et

    l'arc présente un rayon (Rh) d'au moins 2,5 mm et ne dépassant pas 7,5 mm.

4.  Pneu de motocyclette (2) selon l'une quelconque des revendications 1 à 3, dans lequel un rapport (W2/W1) d'une distance W2 dans une direction axiale de la ligne de référence de talon externe (LCs) à la ligne de référence de talon interne (LCu), sur une distance W1 dans la direction axiale par rapport à une ligne de référence de bride (BF) s'étendant radialement vers l'intérieur d'une extrémité radialement interne (34n) de la surface de bride (34) à l'orteil (PT) du pneu (2), n'est pas inférieur à 0,4 et n'est pas supérieur à 0,7.

**Fig. 1**

**Fig. 2**

**Fig. 3**

**Fig. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4926314 B
- EP 1011993 B1
- WO 2019107202 A1
- WO 2019155787 A1
- JP 2002254909 A